(19) Europäisches Patentamt
European Patent Office
Office européen des brevets

(11) Veröffentlichungsnummer: **0 325 940**
**A2**

# (12) EUROPÄISCHE PATENTANMELDUNG

(21) Anmeldenummer: **89100368.3**

(22) Anmeldetag: **11.01.89**

(51) Int. Cl.4: **C07F 9/09 , C07F 9/15 , C07F 9/24 , C07F 9/40 , A01N 57/04 , A01N 57/06**

(30) Priorität: **23.01.88 DE 3801995**

(43) Veröffentlichungstag der Anmeldung: **02.08.89 Patentblatt 89/31**

(84) Benannte Vertragsstaaten: **BE CH DE ES FR GB IT LI NL**

(71) Anmelder: **BAYER AG**

**D-5090 Leverkusen 1 Bayerwerk(DE)**

(72) Erfinder: **Riebel, Hans-Jochem, Dr.**
**In der Beek 92**
**D-5600 Wuppertal 1(DE)**
Erfinder: **Naumann, Klaus, Dr.**
**Richard-Wagner-Strasse 9**
**D-5090 Leverkusen 1(DE)**
Erfinder: **Braden, Rudolf, Dr.**
**Nothauserfeld 1**
**D-5068 Odenthal(DE)**
Erfinder: **Homeyer, Bernhard, Dr.**
**Obere Strasse 28**
**D-5090 Leverkusen 3(DE)**
Erfinder: **Hartwig, Jürgen, Dr.**
**Franz-Esser-Strasse 44**
**D-5090 Leverkusen 3(DE)**
Erfinder: **Matthaei, Hans-Detlef, Dr.**
**Paul-Klee-Strasse 67**
**D-5090 Leverkusen 1(DE)**

(54) **(Thio)Phosphorsäure-hexafluorbutylester.**

(57) Die Erfindung die neuen (Thio)Phosphorsäure-hexafluorbutylester der allgemeinen Formel (I)

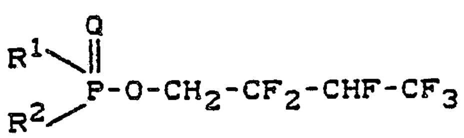

(I)

in welcher
Q für Sauerstoff oder Schwefel steht,
$R^1$ für einen gegebenenfalls durch Halogen substituierten Rest aus der Reihe Alkyl, Alkoxy, Alkylthio steht oder für Benzyl oder Phenyl steht, welche gegebenenfalls durch Halogen, Alkyl oder Alkoxy substituiert sind, oder für Alkylamino oder Dialkylamino steht, und
$R^2$ für einen gegebenenfalls durch Halogen substituierten Rest aus der Reihe Alkyl, Alkoxy, Alkylthio steht oder für Alkylamino oder Dialkylamino steht,
welche als Schädlingsbekämpfungsmittel verwendet werden können.

EP 0 325 940 A2

## (Thio)Phosphorsäure-hexafluorbutylester

Die Erfindung betrifft neue (Thio)Phosphorsäure-hexafluorbutylester, ein Verfahren zu ihrer Herstellung und ihre Verwendung als Schädlingsbekämpfungsmittel.

Es ist bekannt, daß bestimmte Phosphorsäureester, wie z. B. Phosphorsäure-ethylester-isopropylamid-(3-methyl-4-methylthio-phenylester) (Fenamiphos/Nemacur), und Carbaminsäureester, wie z. B. N-Methyl-O-(3,5-dimethyl-4-methylthio-phenyl)-carbaminsäureester (Mercaptodimethur/Methiocarb/Mesurol), zur Bekämpfung von tierischen Schädlingen verwendet werden können (vgl. US-P 2 978 479 bzw. DE-AS 1 162 352). Die Eigenschaften dieser bekannten Verbindungen sind jedoch unter bestimmten Umständen, insbesondere bei niedrigen Wirkstoffkonzentrationen und Aufwandmengen, nicht immer voll zufriedenstellend.

Es wurden nun die neuen (Thio)Phosphorsäure-hexafluorbutylester der allgemeinen Formel (I)

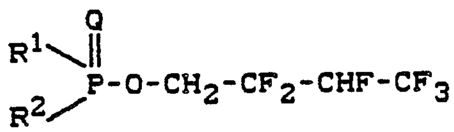 (I)

in welcher

Q für Sauerstoff oder Schwefel steht,

$R^1$ für einen gegebenenfalls durch Halogen substituierten Rest aus der Reihe Alkyl, Alkoxy, Alkylthio steht oder für Benzyl oder Phenyl steht, welche gegegebenenfalls durch Halogen, Alkyl oder Alkoxy substituiert sind, oder für Alkylamino oder Dialkylamino steht, und

$R^2$ für einen gegebenenfalls durch Halogen substituierten Rest aus der Reihe Alkyl, Alkoxy, Alkylthio steht oder für Alkylamino oder Dialkylamino steht,

gefunden.

Weiter wurde gefunden, daß man die neuen (Thio)Phosphorsäure-hexafluorbutylester der allgemeinen Formel (I) erhält, wenn man (Thio)Phosphorsäurechloride der allgemeinen Formel (II),

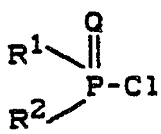 (II)

in welcher

Q, $R^1$ und $R^2$ die oben angegebenen Bedeutungen haben,

mit dem Hexafluorbutanol der Formel (III)

$HO\text{-}CH_2\text{-}CF_2\text{-}CHF\text{-}CF_3$ (III)

gegebenenfalls in Gegenwart eines Säureakzeptors und gegebenenfalls in Gegenwart eines Verdünnungsmittels umsetzt.

Die neuen Verbindungen der allgemeinen Formel (I) verfügen über Eigenschaften, die ihre Verwendung als Schädlingsbekämpfungsmittel ermöglichen; sie zeigen starke Wirkung gegen Arthropoden und Nematoden und können insbesondere zur Bekämpfung von Insekten und Nematoden, vorzugsweise im Boden verwendet werden.

Alkyl in der Definition von $R^1$ und $R^2$ ist geradkettig oder verzweigt und enthält vorzugsweise 1 bis 6, insbesondere 1 bis 4, Kohlenstoffatome.

Beispielhaft seien Methyl, Ethyl, Propyl, Isopropyl, Butyl, Isobutyl, sec-Butyl und tert-Butyl genannt.

Alkoxy und Alkylthio in der Definition von $R^1$ und $R^2$ enthalten im Alkylteil geradkettiges oder verzweigtes Alkyl mit vorzugsweise 1 bis 6, insbesondere 1 bis 4, Kohlenstoffatomen.

Beispielhaft seien Methoxy, Ethoxy, Propoxy, Isopropoxy, Butoxy, Isobutoxy, sec-Butoxy, Methylthio, Ethylthio, Propylthio, Isopropylthio, Butylthio, Isobutylthio und sec-Butylthio genannt.

Halogen in der Definition von $R^1$ und $R^2$ steht, wo nicht anders erläutert, für Fluor, Chlor, Brom oder Iod, vorzugsweise für Fluor oder Chlor.

Alkylamino und Dialkylamino in der Definition von $R^1$ und $R^2$ enthalten im Alkylteil bzw. in den Alkylteilen geradkettiges oder verzweigtes Alkyl mit vorzugsweise 1 bis 6, insbesondere 1 bis 4, Kohlenstoffatomen.

Beispielhaft seien Methylamino, Ethylamino, Propylamino, Isopropylamino, Butylamino, Isobutylamino, sec-Butylamino, tert-Butylamino, Dimethylamino, Diethylamino und Dipropylamino genannt.

Vorzugsweise steht Q für Sauerstoff.

Die gegebenenfalls substituierten Reste $R^1$ und $R^2$ können einen oder mehrere, vorzugsweise 1 bis 5, insbesondere 1 bis 3, gleiche oder verschiedene der angegebenen Substituenten enthalten. Vorzugsweise sind die Reste $R^1$ und $R^2$ jedoch unsubstituiert.

Bevorzugt werden die neuen (Thio)Phosphorsäure-hexafluorbutylester der Formel (I), in welcher

Q für Sauerstoff oder Schwefel (vorzugsweise Sauerstoff) steht,

$R^1$ für gegebenenfalls durch Fluor und/oder Chlor substituiertes $C_1$-$C_6$-Alkyl, für gegebenenfalls durch Fluor und/oder Chlor substituiertes $C_1$-$C_6$-Alkoxy, für gegebenenfalls durch Fluor und/oder Chlor substituiertes $C_1$-$C_6$-Alkylthio, für gegebenenfalls durch Fluor, Chlor, $C_1$-$C_6$-Alkyl oder $C_1$-$C_6$-<Alkoxy substituiertes Benzyl, für gegebenenfalls durch Fluor, Chlor, $C_1$-$C_6$-Alkyl oder $C_1$-$C_6$-Alkoxy substituiertes Phenyl, für $C_1$-$C_6$-Alkylamino oder für Di-($C_1$-$C_6$-alkyl)-amino steht, und

$R^2$ für gegebenenfalls durch Fluor und/oder Chlor substituiertes $C_1$-$C_6$-Alkyl, für gegebenenfalls durch Fluor und/oder Chlor substituiertes $C_1$-$C_6$-Alkoxy, für gegebenenfalls durch Fluor und/oder Chlor substituiertes $C_1$-$C_6$-Alkylthio, für $C_1$-$C_6$-Alkylamino oder für Di-( $C_1$-$C_6$-alkyl)-amino steht.

Besonders bevorzugt werden die neuen (Thio)Phosphorsäure-hexafluorbutylester der Formel (I), in welcher

Q für Sauerstoff oder Schwefel (vorzugsweise Sauerstoff) steht,

$R^1$ für $C_1$-$C_4$-Alkyl, $C_1$-$C_4$-Alkoxy, $C_1$-$C_4$-Alkylthio, Phenyl, $C_1$-$C_4$-Alkylamino oder Di-($C_1$-$C_4$-alkyl)-amino steht und

$R^2$ für $C_1$-$C_4$-Alkoxy steht.

Ganz besonders bevorzugt werden die Verbindungen der allgemeinen Formel (I), in welcher

Q für Sauerstoff oder Schwefel (vorzugsweise Sauerstoff) steht,

$R^1$ für $C_1$-$C_4$-Alkyl, $C_1$-$C_4$-Alkoxy oder $C_1$-$C_4$-Alkylthio steht und

$R^2$ für $C_1$-$C_4$-Alkoxy steht.

Beispiele für die Verbindungen der Formel (I) sind in der nachstehenden Tabelle 1 aufgeführt - vgl. auch die Herstellungsbeispiele.

**Tabelle 1:** Beispiele für die Verbindungen der Formel (I)

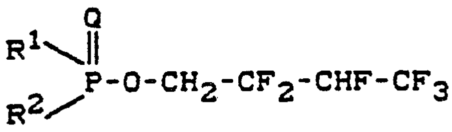 (I)

| Q | $R^1$ | $R^2$ |
|---|---|---|
| O | $CH_3$ | $OCH_3$ |
| S | $CH_3$ | $OCH_3$ |
| O | $CH_3$ | $OC_2H_5$ |
| S | $CH_3$ | $OC_2H_5$ |
| O | $C_2H_5$ | $OCH_3$ |
| S | $C_2H_5$ | $OCH_3$ |
| O | $OCH_3$ | $OCH_3$ |
| S | $OCH_3$ | $OCH_3$ |
| O | $OC_2H_5$ | $OC_2H_5$ |
| S | $OC_2H_5$ | $OC_2H_5$ |
| O | $OC_2H_5$ | $OC_3H_7$ |

Tabelle 1 - Fortsetzung

| Q | $R^1$ | $R^2$ |
|---|---|---|
| S | $OC_2H_5$ | $OC_3H_7$ |
| O | $OC_2H_5$ | $OCH(CH_3)_2$ |
| S | $OC_2H_5$ | $OCH(CH_3)_2$ |
| O | $OC_3H_7$ | $OC_3H_7$ |
| S | $OC_3H_7$ | $OC_3H_7$ |
| O | $OC_4H_9$ | $OC_4H_9$ |
| S | $OC_4H_9$ | $OC_4H_9$ |
| O | $OCH_2CH(CH_3)_2$ | $OCH_2CH(CH_3)_2$ |
| S | $OCH_2CH(CH_3)_2$ | $OCH_2CH(CH_3)_2$ |
| O | $OCH_2CH_2Cl$ | $OCH_2CH_2Cl$ |
| O | $C_2H_5$ | $OC_2H_5$ |
| S | $C_2H_5$ | $OC_2H_5$ |
| O | $SCH_3$ | $OCH_3$ |
| S | $SCH_3$ | $OCH_3$ |
| O | $SC_2H_5$ | $OCH_3$ |
| S | $SC_2H_5$ | $OCH_3$ |
| O | $SCH_3$ | $OC_2H_5$ |
| S | $SCH_3$ | $OC_2H_5$ |
| O | $SC_2H_5$ | $OC_2H_5$ |
| S | $SC_2H_5$ | $OC_2H_5$ |
| O | $SCH_3$ | $OC_3H_7$ |
| S | $SCH_3$ | $OC_3H_7$ |

Tabelle 1 - Fortsetzung

| Q | $R^1$ | $R^2$ |
|---|---|---|
| O | $SC_2H_5$ | $OC_3H_7$ |
| S | $SC_2H_5$ | $OC_3H_7$ |
| O | $SC_3H_7$ | $OC_2H_5$ |
| S | $SC_3H_7$ | $OC_2H_5$ |
| O | $SCH(CH_3)_2$ | $OC_2H_5$ |
| S | $SCH(CH_3)_2$ | $OC_2H_5$ |
| O | $SC_4H_9$ | $OC_2H_5$ |
| S | $SC_4H_9$ | $OC_2H_5$ |
| O | $SCH_2CH(CH_3)_2$ | $OC_2H_5$ |
| S | $SCH_2CH(CH_3)_2$ | $OC_2H_5$ |
| O | $SCHCH_2CH_3$<br>\|<br>$CH_3$ | $OC_2H_5$ |
| S | $SCHCH_2CH_3$<br>\|<br>$CH_3$ | $OC_2H_5$ |
| O | $C_6H_5$ | $OCH_3$ |
| S | $C_6H_5$ | $OCH_3$ |
| O | $C_6H_5$ | $OC_2H_5$ |
| S | $C_6H_5$ | $OC_2H_5$ |
| O | $NHCH_3$ | $OCH_3$ |
| S | $NHCH_3$ | $OCH_3$ |
| O | $NHC_2H_5$ | $OCH_3$ |

<u>Tabelle 1</u> - Fortsetzung

| Q | $R^1$ | $R^2$ |
|---|---|---|
| S | $NHC_2H_5$ | $OCH_3$ |
| O | $NHCH_3$ | $OC_2H_5$ |
| S | $NHCH_3$ | $OC_2H_5$ |
| O | $N(CH_3)_2$ | $OC_2H_5$ |
| S | $N(CH_3)_2$ | $OC_2H_5$ |
| O | $NHC_2H_5$ | $OC_2H_5$ |
| S | $NHC_2H_5$ | $OC_2H_5$ |
| O | $N(C_2H_5)_2$ | $OC_2H_5$ |
| S | $N(C_2H_5)_2$ | $OC_2H_5$ |
| O | $NHC_3H_7$ | $OCH_3$ |
| S | $NHC_3H_7$ | $OCH_3$ |
| O | $NHCH(CH_3)_2$ | $OCH_3$ |
| S | $NHCH(CH_3)_2$ | $OCH_3$ |
| O | $NHC_3H_7$ | $OC_2H_5$ |
| S | $NHC_3H_7$ | $OC_2H_5$ |
| O | $NHCH(CH_3)_2$ | $OC_2H_5$ |
| S | $NHCH(CH_3)_2$ | $OC_2H_5$ |
| O | $NHC_4H_9$ | $OC_2H_5$ |
| S | $NHC_4H_9$ | $OC_2H_5$ |

Verwendet man als Ausgangsstoffe Phosphorsäurechloriddimethylester und 2,2,3,4,4,4-Hexafluor-1-butanol so kann der Reaktionsablauf beim erfindungsgemäßen Herstellungsverfahren durch das folgende Formelschema wiedergegeben werden:

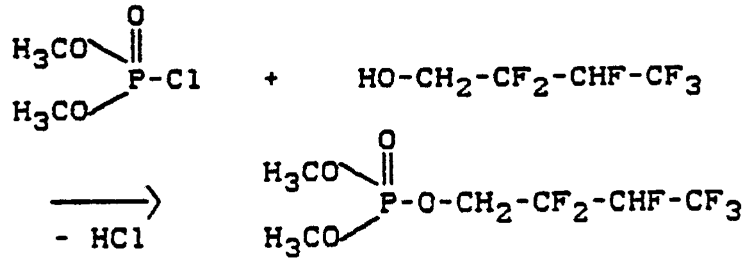

Die als Ausgangsstoffe zu verwendenden (Thio)Phosphorsäurechloride sind durch die Formel (II) allgemein definiert. In dieser Formel haben Q, $R^1$ und $R^2$ die allgemeinen und vorzugsweisen Bedeutungen, wie sie für die Verbindungen der Formel (I) genannt werden.

Als Beispiele für die Ausgangsstoffe der Formel (II) seien genannt: Dimethylphosphinsäurechlorid, Dimethylthiophosphinsäurechlorid, Methan-, Ethan-, und Benzolphosphonsäure-chlorid-methylester, -ethylester, -propylester, -butylester, -pentylester und -hexylester, Methan-, Ethan- und Benzol-thiophosphonsäure-chlorid-S-methylester, -S-ethylester, -S-propylester, -S-butylester, -S-pentylester und -S-hexylester, Methanphosphonsäure-chlorid -methylamid, -ethylamid, -propylamid und -butylamid, Methan-, Ethan- und Benzol-thiophosphonsäure-chlorid-O-methylester, -O-ethylester, -O-propylester, -O-butylester, -O-pentylester und -O-hexylester, Methan, Ethan- und Benzol-dithiophosphonsäure-chlorid-methylester, -ethylester, -propylester, -butylester, -pentylester und -hexylester, Methan-, Ethan- und Benzol-thiophosphonsäure-chlorid-methylamid, -ethylamid, -propylamid und -butylamid, Phosphorsäure-chlorid-dimethylester, -diethylester, -dipropylester, -dibutylester, -methylester-ethylester, -methylester-propylester, -methylester-butylester, -ethylester-propylester, -ethylester-butylester und -propylester-butylester, Thiophosphorsäure-chlorid-O,S-dimethylester, -O,S-diethylester, -O,S-dipropylester, -O,S-dibutylester, -O-methylester-S-ethylester, -O-methylester-S-propylester, -O-methylester-S-butylester, -O-ethylester-S-methylester, -O-ethylester-S-propylester, -O-ethylester-S-butylester, -O-propylester-S-methylester, -O-propylester-S-ethylester, -O-propylester-S-butylester, -O-butylester-S-methylester, -O-butylester-S-ethylester und -O-butylester-S-propylester, Phosphorsäure-chlorid-methylamid-methylester, -methylamid-ethylester, -methylamid-propylester, -methylamid-butylester, -ethylamid-methylester, -ethylamid-ethylester, -ethylamid-propylester, -ethylamid-butylester, -propylamid-methylester, -propylamid-ethylester, -propylamid-propylester, -propylamid-butylester, -butylamid-methylester, -butylamid-ethylester, -butylamid-propylester und -butylamid-butylester, Dithiophosphorsäure-chlorid-S,S-dimethylester-, -S,S-diethylester, -S,S-dipropylester und -S,S-dibutylester, Thiophosphorsäure-chlorid-methylamid-S-methylester, -methylamid-S-ethylester, -methylamid-S- propylester, -ethylamid-S-methylester, -ethylamid-S-ethylester, -ethylamid-S-propylester, -propylamid-S-methylester, -propylamid-S-ethylester und -propylamid-S-propylester, Phosphorsäure-chlorid-bis-dimethylamid und -bis-diethylamid, Thiophosphorsäure-chlorid-O,O-dimethylester, -O,O-diethylester, -O,O-dipropylester, -O,O-dibutylester, -O-methylester-O-ethylester, -O-methylester-O-propylester, -O-methylester-O-butylester, -O-ethylester-O-propylester, -O-ethylester-O-butylester und -O-propylester-O-butylester, Dithiophosphorsäure-chlorid-O,S-dimethylester, -O,S-diethylester, -O,S-dipropylester, -O,S-dibutylester, -O-methylester-S-ethylester, -O-methylester-S-propylester, -O-methylester-S-butylester, -O-ethylester-S-propylester, -O-ethylester-S-butylester, -O-ethylester-S-methylester, -O-propylester-S-methylester, -O-propylester-S-ethylester, -O-propylester-S-butylester, -O-butylester-S-methylester, -O-butylester-S-ethylester und -O-butylester-S-propylester, Thiophosphorsäure-chlorid-methylamid-O-methylester, -methylamid-O-ethylester, -methylamid-O-propylester, -methylamid-O-butylester, -ethylamid-O-methylester, -ethylamid-O-ethylester, -ethylamid-O-propylester, -ethylamid-O-butylester, -propylamid-O-methylester, -propylamid-O-ethylester, -propylamid-O-propylester, propylamid-O-butylester, -butylamid-O-methylester, -butylamid-O-ethylester, -butylamid-O-propylester und butylamid-O-butylester, Trithiophosphorsäure-chlorid-S,S-dimethylester, -S,S-diethylester, -S,S-dipropylester und -S,S-dibutylester, Thiophosphorsäure-chlorid-bis-dimethylamid und -bis-diethylamid.

Die Ausgangsstoffe der Formel (II) sind bekannt (vgl. Houben-Weyl, Methoden der organischen Chemie, Band 12/1, S. 415 - 420 und S. 560 - 563, Band 12/2, S. 274 - 292, S. 405 - 408, S. 607 - 618, S. 621 - 622 und S. 755 -757, Band E2, S. 333 - 684).

Das weiter als Ausgangsstoff zu verwendende 2,2,3,4,4,4-Hexafluor-1-butanol der Formel (III) ist aus der Literatur bekannt (vgl. J. Am. Chem. Soc. 77 (1959, 910 -914).

Das erfindungsgemäße Verfahren zur Herstellung der neuen Verbindungen der Formel (I) wird vorzugsweise unter Verwendung von Verdünnungsmitteln durchgeführt. Als Verdünnungsmittel kommen dabei praktisch alle inerten organischen Lösungsmittel in Frage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäuremethylester und-ethylester, Nitrile wie z. B. Acetonitril und Propionitril, Amide wie z. B. Dimethylformamid, Dimethylacetamid und N-Methyl-pyrrolidon sowie Dimethylsulfoxid, Tetramethylensulfon und Hexamethylphosphorsäuretriamid.

Als Säureakzeptoren können bei dem erfindungsgemäßen Verfahren alle üblicherweise für derartige Umsetzungen verwendbaren Säurebindemittel eingesetzt werden. Vorzugsweise in Frage kommen Alkalimetallhydroxide wie z. B. Natrium- und Kaliumhydroxid, Erdalkalihydroxide wie z. B. Calciumhydroxid,

Alkalicarbonate und -alkoholate wie Natrium- und Kaliumcarbonat, Natrium- und Kali-tert-butylat, ferner aliphatische, aromatische oder heterocyclische Amine, beispielsweise Triethylamin, Trimethylamin, Dimethylanilin, Dimethylbenzylamin, Pyridin, 1,5-Diazabicyclo-[4,3,0]-non-5-en (DBN), 1,8-Diazabicyclo-[5,4,0]-undec-7-en (DBU) und 1,4-Diazabicyclo-[2,2,2]-octan (DABCO).

Die Reaktionstemperaturen können bei dem erfindungsgemäßen Verfahren in einem größeren Bereich variiert werden. Im allgemeinen arbeitet man bei Temperaturen zwischen 0 °C und 120 °C, vorzugsweise bei Temperaturen zwischen 10 °C und 80 °C.

Die Umsetzungen werden im allgemeinen bei Normaldruck durchgeführt.

Zur Durchführung des erfindungsgemäßen Verfahrens werden die Ausgangsstoffe der Formeln (II) und (III) im allgemeinen in annähernd äquimolaren Mengen eingesetzt. Ein größerer Überschuß der einen oder der anderen Reaktionskomponente bringt keine wesentlichen Vorteile.

Die Reaktionskomponenten werden im allgemeinen bei Raumtemperatur oder unter leichter Außenkühlung vermischt und das Reaktionsgemisch wird bis zum Ende der Umsetzung gerührt. Die Aufarbeitung kann nach üblichen Methoden durchgeführt werden. Beispielsweise wird - gegebenenfalls nach Einengen - mit Wasser und einem mit Wasser praktisch nicht mischbaren organischen Lösungsmittel, wie z. B. Toluol oder Methylenchlorid, geschüttelt, die organische Phase abgetrennt, mit Wasser gewaschen, mit einem üblichen Trockenmittel, wie z. B. Natriumsulfat, getrocknet und filtriert. Vom Filtrat wird das Lösungsmittel unter vermindertem Druck sorgfältig abdestilliert. Der verbleibende Rückstand enthält dann im wesentlichen das jeweilige Produkt der Formel (I).

Die Wirkstoffe eignen sich zur Bekämpfung von tierischen Schädlingen, vorzugsweise Arthropoden und Nematoden, insbesondere Insekten und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Phodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Hephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus galinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Besonders hervorzuheben ist die gute Wirkung gegen pflanzenschädigende Bodeninsekten und Nematoden sowie gegen resistente Dipteren ("Hygiene-Schädlinge").

Weiter ist die im Vergleich mit handelsüblichen Schädlingsbekämpfungsmitteln gleicher Wirkungsrichtung erheblich geringere Warmblütertoxizität hervorzuheben.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von

Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwen dungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

<u>Herstellungsbeispiele</u>

<u>Beispiel 1</u>

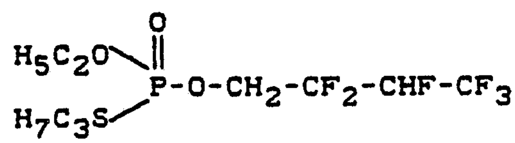

Eine Lösung von 8,5 g (0,077 Mol) 1,4-Diazabicyclo-[2,2,2]-octan (DABCO) in 40 ml Toluol wird unter Rühren bei 15 °C bis 30 °C zu einer Mischung aus 12,7 g (0,07 Mol) 2,2,3,4,4,4-Hexafluor-1-butanol, 14,2 g (0,07 Mol) Thiophosphorsäure-chlorid-O-ethylester-S-propylester und 50 ml Toluol gegeben und das komplette Reaktionsgemisch wird 3 Stunden bei 15 °C bis 25 °C gerührt.

Anschließend wird mit Wasser gewaschen, die organische Phase mit Natriumsulfat getrocknet und filtriert. Vom Filtrat wird das Lösungsmittel im Wasserstrahlvakuum bei 40 °C bis 60 °C sorgfältig abdestilliert.

Man erhält 18,2 g (75 % der Theorie) Thiophosphorsäure-O-ethylester-S-propylester-O-(2,2,3,4,4,4-hexafluor-propyl-ester) als öligen Rückstand vom Brechungsindex $n_D^{20}$ = 1,4223.

Analog Beispiel 1 und gemäß der allgemeinen Beschreibung des erfindungsgemäßen Herstellungsverfahrens können die in der nachstehenden Tabelle 2 aufgeführten Verbindungen der Formel (I) hergestellt werden.

Tabelle 2: Herstellungsbeispiele für die Verbindungen der Formel (I)

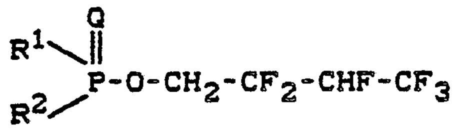

(I)

| Beisp.-Nr. | Q | $R^1$ | $R^2$ | Physikal. Konstante |
|---|---|---|---|---|
| 2 | S | $OC_2H_5$ | $OC_2H_5$ | $Kp_2$ = 86 °C |
| 3 | S | $CH_3$ | $OC_2H_5$ | $Kp_1$ = 84 °C |
| 4 | S | $OCH_3$ | $OCH_3$ | $Kp_2$ = 87 °C |
| 5 | S | $SC_3H_7$ | $OC_2H_5$ | $Kp_2$ = 87 °C |
| 6 | S | $OC_2H_5$ | $OCH(CH_3)_2$ | $n_D^{20}$ = 1,4749 |
| 7 | O | $NHCH(CH_3)_2$ | $OC_2H_5$ | $Kp_2$ = 105 °C |
| 8 | S | $NHCH(CH_3)_2$ | $OC_2H_5$ | $Kp_1$ = 89 °C |

Beispiel A

Grenzkonzentrations-Test / Bodeninsekten

Testinsekt: Diabrotica balteata - Larven im Boden
Lösungsmittel: 3 Gewichsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration. Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in 0,5-l-Töpfe und läßt diese bei 20 °C stehen.
Sofort nach dem Ansatz werden je Topf 6 vorgekeimte Maiskörner gelegt. Nach 2 Tagen werden in den behandelten Boden die entsprechenen Testinsekten gesetzt. Nach weiteren 7 Tagen wird der Wirkungsgrad des Wirkstoffes durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.
Bei diesem Test zeigte z. B. bei einer Wirkstoffkonzentration von 5 ppm die Verbindung gemäß Herstellungsbeispiel 1 einen Wirkungsgrad von 95 %.

Beispiel B

Grenzkonzentrations-Test / Nematoden

Testnematode: Meloidogyne incognita
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.
Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27 °C.
Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.
Bei diesem Test zeigte z. B. bei einer Wirkstoffkonzentration von 20 ppm die Verbindung gemäß Herstellungsbeispiel 1 einen Wirkungsgrad von 100 %.

Beispiel C

$LT_{100}$-Test für Dipteren

Testtiere: Musca Domestica (resistent)
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.
2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.
Der Zustand der Testtiere wird laufend kontrolliert. Es wird diejenige Zeit ermittelt, welche für einen 100 %igen knock down-Effekt notwendig ist.
Bei diesem Test zeigte z. B. die Verbindung gemäß Herstellungsbeispiel 1 bei einer Wirkstoffkonzentration von 0,02 Gewichtsprozent nach 80 Minuten einen 100 %igen Knock-down-Effekt.

## Ansprüche

1. (Thio)Phosphorsäure-hexafluorbutylester der allgemeinen Formel (I)

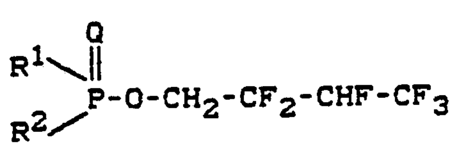

(I)

in welcher
Q für Sauerstoff oder Schwefel steht,
$R^1$ für einen gegebenenfalls durch Halogen substituierten Rest aus der Reihe Alkyl, Alkoxy, Alkylthio steht oder für Benzyl oder Phenyl steht, welche gegebenenfalls durch Halogen, Alkyl oder Alkoxy substituiert sind, oder für Alkylamino oder Dialkylamino steht, und
$R^2$ für einen gegebenenfalls durch Halogen substituierten Rest aus der Reihe Alkyl, Alkoxy, Alkylthio steht oder für Alkylamino oder Dialkylamino steht.

2. (Thio)Phosphorsäure-hexafluorbutylester der Formel (I) gemäß Anspruch 1, in welcher
Q für Sauerstoff oder Schwefel steht,
$R^1$ für gegebenenfalls durch Fluor und/oder Chlor substituiertes $C_1$-$C_6$-Alkyl, für gegebenenfalls durch Fluor und/oder Chlor substituiertes $C_1$-$C_6$-Alkoxy, für gegebenenfalls durch Fluor und/oder Chlor substituiertes $C_1$-$C_6$-Alkylthio, für gegebenenfalls durch Fluor, Chlor, $C_1$-$C_6$-Alkyl oder $C_1$-$C_6$-Alkoxy substituiertes Benzyl, für gegebenenfalls durch Fluor, Chlor, $C_1$-$C_6$-Alkyl oder $C_1$-$C_6$-Alkoxy substituiertes Phenyl, für $C_1$-$C_6$-Alkylamino oder für Di-($C_1$-$C_6$-alkyl)-amino steht, und
$R^2$ für gegebenenfalls durch Fluor und/oder Chlor substituiertes $C_1$-$C_6$-Alkyl, für gegebenenfalls durch Fluor und/oder Chlor substituiertes $C_1$-$C_6$-Alkoxy, für gegebenenfalls durch Fluor und/oder Chlor substituiertes $C_1$-$C_6$-Alkylthio, für $C_1$-$C_6$-Alkylamino oder für Di-($C_1$-$C_6$-alkyl)-amino steht.

3. (Thio)Phosphorsäure-hexafluorbutylester der Formel (I) gemäß Anspruch 1, in welcher
Q für Sauerstoff oder Schwefel steht,
$R^1$ für $C_1$-$C_4$-Alkyl, $C_1$-$C_4$-Alkoxy, $C_1$-$C_4$-Alkylthio, Phenyl, $C_1$-$C_4$-Alkylamino oder Di-($C_1$-$C_4$-alkyl)-amino steht und
$R^2$ für $C_1$-$C_4$-Alkoxy steht.

4. Verbindungen der allgemeinen Formel (I) gemäß Anspruch 1, in welcher
Q für Sauerstoff oder Schwefel steht,
$R^1$ für $C_1$-$C_4$-Alkyl, $C_1$-$C_4$-Alkoxy oder $C_1$-$C_4$-Alkylthio steht und
$R^2$ für $C_1$-$C_4$-Alkoxy steht.

5. Thiophosphorsäure-O-ethylester-S-propylester-O-(2,2,3,4,4,4-hexafluor-propyl-ester) der Formel

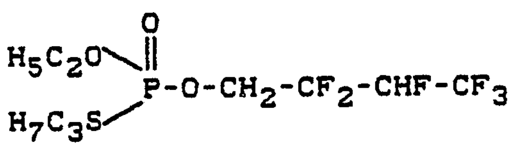

6. Verfahren zur Herstellung der (Thio)Phosphorsäure-hexafluorbutylester der allgemeinen Formel (I)

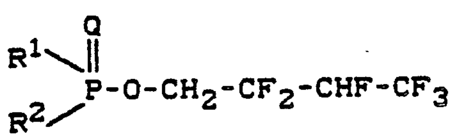 (I)

in welcher
Q für Sauerstoff oder Schwefel steht,
$R^1$ für einen gegebenenfalls durch Halogen substituierten Rest aus der Reihe Alkyl, Alkoxy, Alkylthio steht oder für Benzyl oder Phenyl steht, welche gegebenenfalls durch Halogen, Alkyl oder Alkoxy substituiert sind, oder für Alkylamino oder Dialkylamino steht, und
$R^2$ für einen gegebenenfalls durch Halogen substituierten Rest aus der Reihe Alkyl, Alkoxy, Alkylthio steht oder für Alkylamino oder Dialkylamino steht,
dadurch gekennzeichnet, daß man (Thio)Phosphorsäurechloride der allgemeinen Formel (II),

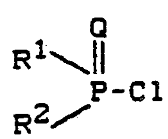 (II)

in welcher
Q, $R^1$ und $R^2$ die oben angegebenen Bedeutungen haben,
mit dem Hexafluorbutanol der Formel (III)
$HO-CH_2-CF_2-CHF-CF_3$ (III)
gegebenenfalls in Gegenwart eines Säureakzeptors und gegebenenfalls in Gegenwart eines Verdünnungsmittels umsetzt.

7. Schädlingsbekämpfungsmittel, gekennzeichnet durch einen Gehalt an mindestens einem (Thio)-Phosphorsäure-hexafluorbutylester der Formel (I), gemäß den Ansprüchen 1 oder 6.

8. Verwendung von (Thio)Phosphorsäure-hexafluorbutylestern der Formel (I), gemäß den Ansprüchen 1 oder 6 zur Bekämpfung von Schädlingen.

9. Verfahren zur Bekämpfung von Schädlingen, dadurch gekennzeichnet, daß man (Thio)-Phosphorsäure-hexafluorbutylester der Formel (I), gemäß den Ansprüchen 1 oder 6 auf Schädlinge und/oder ihren Lebensraum einwirken läßt.

10. Verfahren zur Herstellung von Schädlingsbekämpfungsmittel, dadurch gekennzeichnet, daß man (Thio)Phosphorsäure-hexafluorbutylester der Formel (I), gemäß den Ansprüchen 1 oder 6 mit Streckmitteln und/oder oberflächenaktiven Mitteln vermischt.